# EUROPEAN PATENT SPECIFICATION

(11) **EP 3 567 474 B1**
(45) Date of publication and mention of the grant of the patent: **13.10.2021**
(21) Application number: 17890410.8
(22) Date of filing: 26.12.2017
(51) Int. Cl.: G06F 8/34, G06F 9/44

(54) **COMPONENT PUBLISHING METHOD, COMPONENT BUILDING METHOD BASED ON GRAPHICAL MACHINE LEARNING ALGORITHM PLATFORM, AND GRAPHICAL MACHINE LEARNING ALGORITHM PLATFORM**
KOMPONENTENPUBLIKATIONSVERFAHREN, KOMPONENTENBAUVERFAHREN AUF DER BASIS EINER GRAFISCHEN MASCHINENLERNALGORITHMUSPLATTFORM UND GRAFISCHE MASCHINENLERNALGORITHMUSPLATTFORM
PROCÉDÉ DE PUBLICATION DE COMPOSANT, PROCÉDÉ DE CONSTRUCTION DE COMPOSANT BASÉ SUR UNE PLATEFORME D'ALGORITHME D'APPRENTISSAGE AUTOMATIQUE GRAPHIQUE ET PLATEFORME D'ALGORITHME D'APPRENTISSAGE AUTOMATIQUE GRAPHIQUE

(30) Priority: 06.01.2017 CN 201710011143
(43) Date of publication of application: 13.11.2019
(73) Proprietor: Alibaba Group Holding Limited, Grand Cayman (KY)
(72) Inventor: LEI, Zongxiong, Hangzhou Zhejiang 311121 (CN); LI, Bo, Hangzhou Zhejiang 311121 (CN)
(74) Representative: Finnegan Europe LLP
(86) International application number: PCT/CN2017/118433
(87) International publication number: WO 2018/126936

(56) References cited:
- CN-A- 103 984 818
- CN-A- 104 216 691
- CN-A- 105 677 446
- CN-A- 105 988 786
- US-A1- 2015 339 570
- US-B2- 7 966 269

## Description

### Technical Field

This application relates to the field of electronic information, and in particular, to a component release method, a graphic machine learning algorithm platform-based component building method, and a graphic machine learning algorithm platform.

### Background

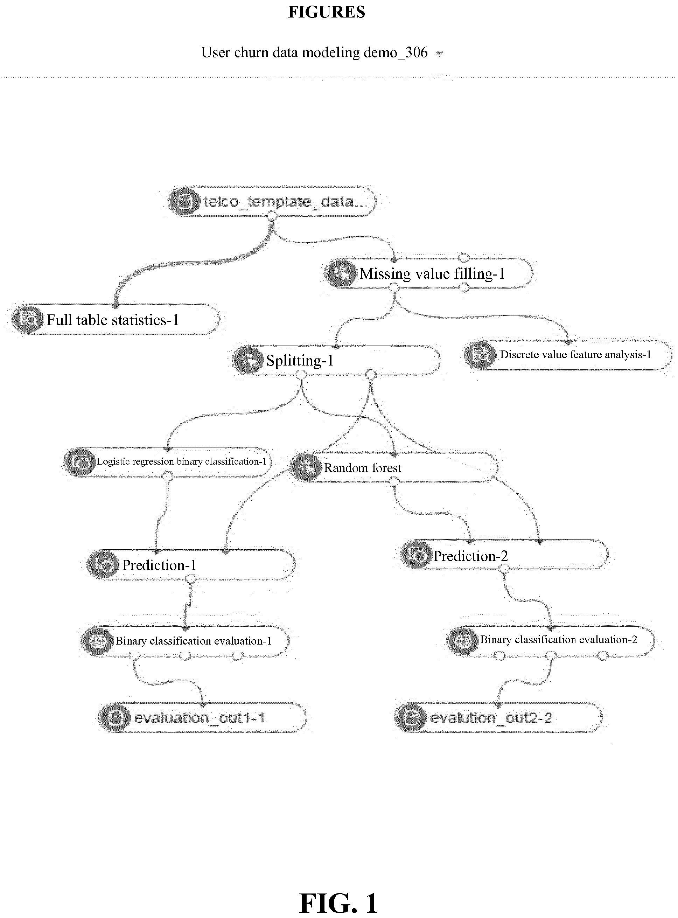

A graphic machine learning algorithm platform is a user interaction platform and can provide a modeling function to users. Components are basic units of the graphic machine learning algorithm platform. A user organizes components into an ordered process to establish a model having a certain function. For example, FIG. 1 shows a model established by a user and having a function of analyzing user churn data, wherein an elliptical icon represents a component, and the name of the elliptical icon, such as "splitting-1" and "random forest", represents the algorithm run by the component. The user can establish a model for analyzing user churn data by connecting these components into an ordered process using arrows.

US 2015/0339570 A1 relates to a system for creating, modifying, deploying, and running intelligent systems by combining and customizing the function and operation of reusable component modules arranged into a neural processing graphs which direct the flow of signals among the modules as compositions of variations on functional components and subassemblies.

However, if the user needs to use the function again, he/she further needs to re-establish the functional model.

### Summary of the Invention

According to aspects of the claimed invention, there are provided a computer-implemented component releasing method applied to a graphic machine learning algorithm platform as recited in claim 1, a computer readable storage medium as recited in claim 5, a computer program as recited in claim 6, and a graphic machine learning algorithm platform as recited in claim 7.

During research, the applicant found that if an established functional model can be released or built as a new component in a graphic machine learning algorithm platform, then when the function is needed again, the new component can be directly selected without the need of establishing the functional model repeatedly.

A component release method, a graphic machine learning algorithm platform-based component building method, and a graphic machine learning algorithm platform are provided in this application, and they aim to solve the problem of how to release or build a new component in a graphic machine learning algorithm platform.

In order to achieve the above objective, this application provides the following technical solutions.

A component release method, comprising:
after receiving an instruction to release a functional model as a new component, determining an input end and output end of the new component according to the connection relationship of components in the functional model;
determining unique identifiers of mandatory parameters of the components in the functional model, wherein the unique identifiers are used for the new component to identify values of the mandatory parameters during running; and
releasing the functional model as the new component.

Optionally, determining unique identifiers of mandatory parameters of the components in the functional model includes:
after receiving an instruction to select a component in the functional model, displaying a visual interface of the component; and
receiving a unique identifier of a mandatory parameter of the component through the visual interface.

Optionally, the visual interface includes:
a configuration interface of a mandatory parameter configuration control of the component, wherein the mandatory parameter configuration control is used for receiving a configuration instruction for the mandatory parameter during the running of the new component.

Optionally, the visual interface further includes:
a configuration interface of an optional parameter configuration control, wherein the optional parameter configuration control is used for receiving a configuration instruction for the optional parameter during the running of the new component.

Optionally, releasing the functional model as the new component includes:
inputting test data to the new component and running the new component;
inputting the test data to the functional model and running the functional model; and
if data output by the new component after running is the same as data output by the functional model after running, then releasing the functional model as the new component.

A graphic machine learning platform-based component creation method, comprising:
after receiving a new component creation instruction, a graphic machine learning platform creating a new component according to an established functional model, wherein a mandatory parameter of each component in the new component has a unique identifier, and the unique identifier is used for the new component to identify the value of the mandatory parameter during running.

Optionally, creating a new component according to an established functional model includes:
determining unique identifiers of mandatory parameters of components in the functional model, and determining an input end and output end of the new component according to the connection relationship of the components in the functional model, so as to create the new component.

A graphic machine learning algorithm platform, comprising:
an input and output determination module for determining, after receiving an instruction to release a functional model as a new component, an input end and output end of the new component according to the connection relationship of components in the functional model;
an identifier determination module for determining unique identifiers of mandatory parameters of the components in the functional model, wherein the unique identifiers are used for the new component to identify values of the mandatory parameters during running; and
a release module for releasing the functional model as the new component.

Optionally, the identifier determination module being used for determining unique identifiers of mandatory parameters of the components in the functional model includes:
the identifier determination module being specifically used for displaying, after receiving an instruction to select a component in the functional model, a visual interface of the component; and receiving the unique identifier of the mandatory parameter of the component through the visual interface.

Optionally, the identifier determination module being used for displaying a visual interface of the component includes:
the identifier determination module being specifically used for displaying a configuration interface of a mandatory parameter configuration control of the component, wherein the mandatory parameter configuration control is used for receiving a configuration instruction for the mandatory parameter during the running of the new component.

Optionally, the visual interface further includes:
a configuration interface of an optional parameter configuration control, wherein the optional parameter configuration control is used for receiving a configuration instruction for the optional parameter during the running of the new component.

Optionally, the release module being used for releasing the functional model as the new component includes:
the release module being specifically used for inputting test data to the new component and running the new component, inputting the test data to the functional model and run the functional model, and if data output by the new component after running is the same as data output by the functional model after running, then releasing the functional model as the new component.

A graphic machine learning algorithm platform, comprising:
a component creation module for creating, after receiving a new component creation instruction, a new component according to an established functional model, wherein a mandatory parameter of each component in the new component has a unique identifier, and the unique identifier is used for the new component to identify the value of the mandatory parameter during running.

Optionally, the component creation module being used for creating a new component according to an established functional model includes:
the component creation module being specifically used for determining unique identifiers of mandatory parameters of components in the functional model, and determining an input end and output end of the new component according to the connection relationship of the components in the functional mode, so as to create the new component.

According to the methods and the graphic machine learning algorithm platforms described in this application, by releasing or building a functional model as new component, when a user needs to use a certain function repeatedly, the new component can be used directly without the need of establishing the functional model repeatedly, thereby facilitating use by the user.

### Brief Description of the Drawings

In order to illustrate the embodiments of this application or the technical solutions in the prior art more clearly, the accompanying drawings used in descriptions of the embodiments or the prior art will be briefly described below. It is apparent that the accompanying drawings in the following description are merely some embodiments of this application, and for those skilled in the art, other accompanying drawings can be further obtained according to the accompanying drawings without creative efforts.
FIG. 1 is a schematic diagram of a model built by a user and having a function of analyzing user churn data;
FIG. 2 is a flowchart of a component release method disclosed in an embodiment of this application;
FIG. 3 is a schematic diagram of a graphic machine learning algorithm platform receiving an instruction to release a functional model as a new component disclosed in an embodiment of this application;
FIG. 4 is a schematic diagram of comparison between a configuration process and running process of a super component disclosed in an embodiment of this application;
FIG. 5 is a schematic diagram of a visual interface of a basic component disclosed in an embodiment of this application;
FIG. 6 is a schematic diagram of a configuration interface of a mandatory parameter configuration control disclosed in an embodiment of this application;
FIG. 7 is an exemplary flowchart of a component release method disclosed in an embodiment of this application;
FIG. 8 is a schematic diagram of using a super component disclosed in an embodiment of this application; and
FIG. 9 is a schematic structural diagram of a graphic machine learning algorithm platform disclosed in an embodiment of this application.

### Detailed Description

The component release or building method provided by this application can be applied to a graphic machine learning algorithm platform, and aims to release or build a functional model built by original components of the graphic machine learning algorithm platform as a new component. For the sake of distinction, in the embodiments of this application, the original components of the graphic machine learning algorithm platform are referred to as basic components, and the new component that is released or built by the basic components is referred to as a super component. A basic component can be a component implementing a single algorithm, and can also be a component that is composed of multiple components each implementing a single algorithm.

The technical solutions in the embodiments of this application will be described clearly and completely in the following with reference to the accompanying drawings in the embodiments of this application. It is apparent that the described embodiments are only some of rather than all the embodiments of his application. Based on the embodiments of this application, all other embodiments obtained by those skilled in the art without creative efforts fall within the protection scope of this application.

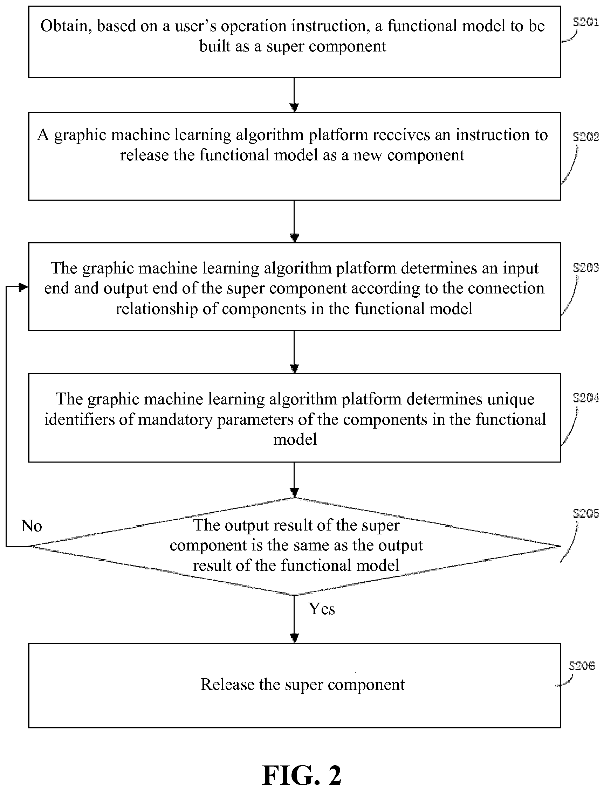

FIG. 2 shows a component release method disclosed in an embodiment of this application, including the following steps:
S201, a graphic machine learning algorithm platform obtains, based on a user's operation instruction, a functional model to be built as a super component.

For the specific implementation of S201, reference can be made to the prior art; further details will not be given here.

S202, the graphic machine learning algorithm platform receives an instruction to release the functional model as a new component.

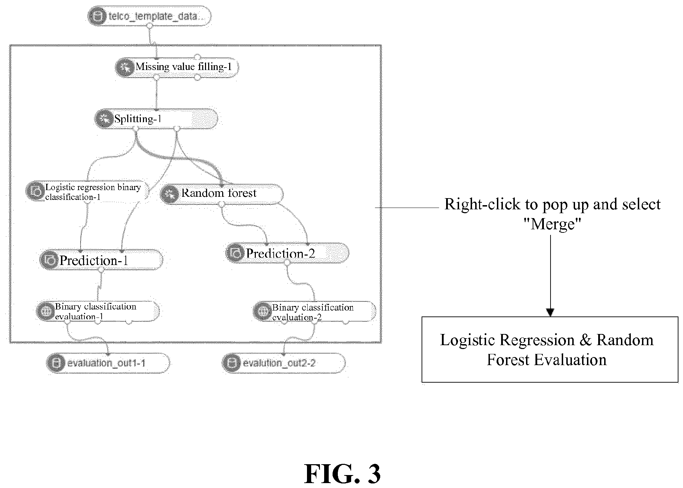

For example, FIG. 3 shows a process that has been established by a user in a graphic machine learning algorithm platform, in which the selected part is a functional model to be built as a super component. The user can right click on the functional model and select "Merge" in a pop-up menu, then the graphic machine learning algorithm platform determines that an instruction to release the functional model of the selected part as a new component is being received.

Further, as shown in FIG. 3, the graphic machine learning algorithm platform can also receive a name entered by the user for the super component. For example, after the user selects "Merge", the graphic machine learning algorithm platform pops up a dialog box and receives the name "Logistic Regression & Random Forest Evaluation" entered by the user in the dialog box.

S203, the graphic machine learning algorithm platform determines an input end and output end of the super component according to the connection relationship of components in the functional model.

Specifically, the connection relationship is a connection relationship indicated by arrows in the functional model, and the graphic machine learning algorithm platform uses a connection end of the functional model to an upstream component as the input end of the super component, and a connection end of the functional model to a downstream component as the output end of the super component.

Continuing with the above example, in FIG. 3, the connection end of the functional model to the upstream component is a port pointed to by an arrow of component "missing value filling-1", and the graphic machine learning algorithm platform uses the port as the input end of the super component. The connection ends of the functional model to the downstream components are ports of the connecting arrows of component "binary classification evaluation-1" and component "binary classification evaluation-2", respectively, and the graphic machine learning algorithm platform uses the two ports as the output ends of the super component.

It should be noted that, when the functional model has multiple ports connected to upstream components, the multiple ports connected to the upstream components are all used as input ends of the super component. When the functional model has multiple ports connected to downstream components, the multiple ports connected to the downstream components are all used as output ends of the super component.

S204, the graphic machine learning algorithm platform determines unique identifiers of mandatory parameters of the components in the functional model.

The unique identifiers are used for the new component to identify values of the mandatory parameters during running.

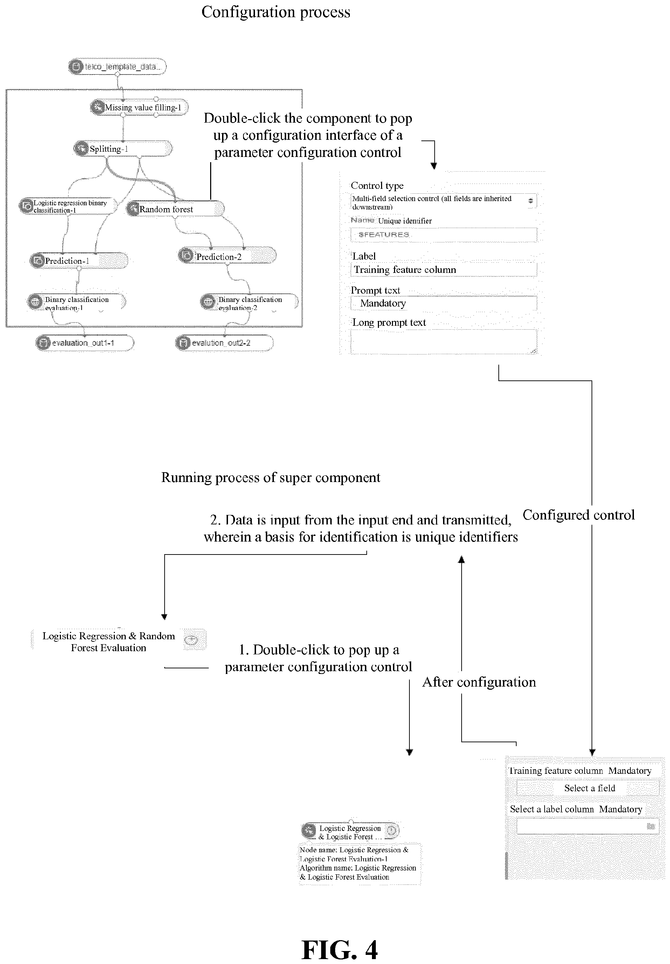

Specifically, after receiving an instruction to select a component in the functional model, the graphic machine learning algorithm platform displays a visual interface of the component, and receives a unique identifier of a mandatory parameter of the component through the visual interface. For example, as shown in the configuration process in FIG. 4, after receiving an instruction of the user double-clicking component "random forest" in the functional model, the graphic machine learning algorithm platform pops up a visual interface of the component "random forest", and the user can enter a unique identifier of a mandatory parameter of the component "random forest" on the visual interface.

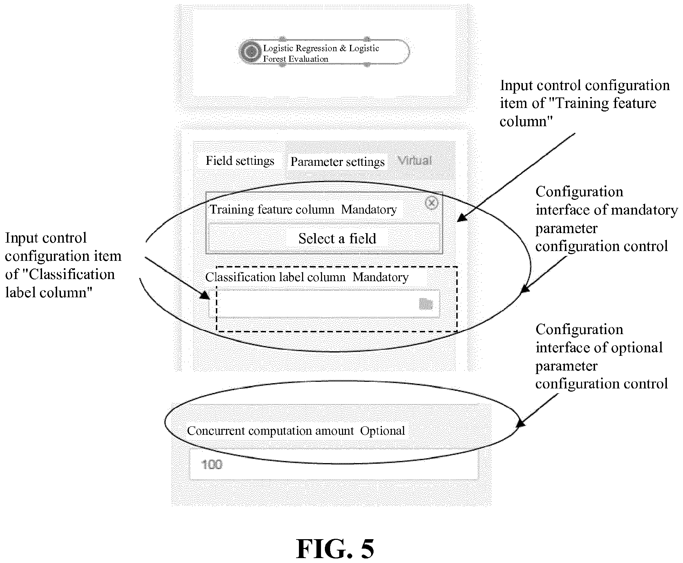

Further, as shown in FIG. 5, a visual interface of the basic component includes a configuration interface of a mandatory parameter configuration control and a configuration interface of an optional parameter configuration control (a configuration interface of an optional parameter configuration control is not shown in FIG. 4). The mandatory parameter configuration control is used for receiving a configuration instruction for a mandatory parameter during the running of the super component. The optional parameter configuration control is used for receiving a configuration instruction for an optional parameter during the running of the super component. As shown in FIG. 4, during the running of the super component, the user configures the mandatory parameters through the mandatory parameter configuration control, for example, entering values of the mandatory parameters. The configuration interface of the mandatory parameter configuration control in FIG. 4 is used for configuring the mandatory parameter configuration control. However, in existing graphic machine learning algorithm platforms, parameter configuration controls are all automatically set by a system and cannot be configured by the user.

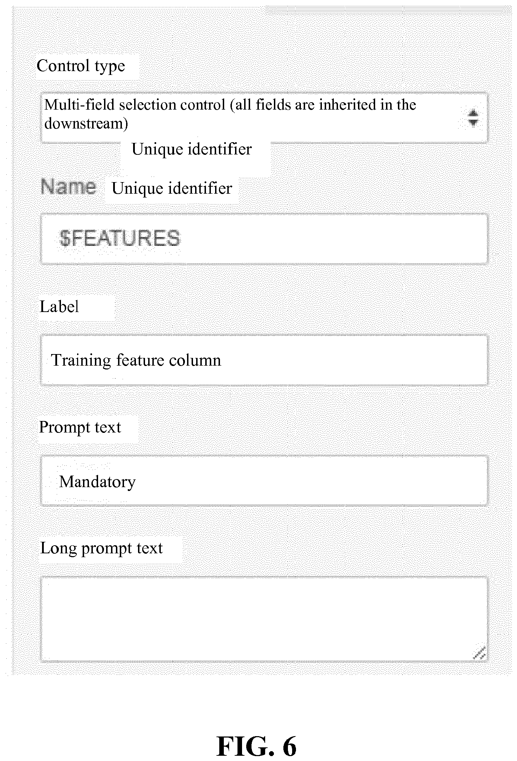

As shown in FIG. 6, the configuration interface of the mandatory parameter configuration control includes at least a unique identifier configuration item. The unique identifier configuration item is used for receiving an identifier set by the user for the mandatory parameter. The user can input, through the identifier configuration item, the identifier set for the mandatory parameter, and the graphic machine learning algorithm platform uses data (including received or internally transmitted), identified by the super component as having the identifier, as the value of the mandatory parameter. In other words, as long as data with the identifier is identified during the running of the super component, the graphic machine learning algorithm platform uses the data as the value of the mandatory parameter. The data is used as the value of the mandatory parameter no matter which basic component in the super component identifies this data. In addition to the unique identifier configuration item, the configuration interface of the mandatory parameter configuration control may further include, but is not limited to, a control type configuration item, a control name configuration item, and a control prompt (including a prompt and a long prompt) text configuration item.

For example, FIG. 6 shows configuration items of a mandatory parameter "training feature column", including:
Control type: in FIG. 6, the user selects the control type to be "multi-field selection control (all fields are inherited downstream)" by drop-down option selection.
Unique identifier: in FIG. 6, the user enters "$FEATURE" as the unique identifier of the "training feature column" parameter.
Control name: in FIG. 6, the user enters "training feature column" as the name of the control.
Prompt text: in FIG. 6, the user enters "mandatory" as the prompt text for the control.
Long prompt text: in FIG. 6, the long prompt text is empty.

The configuration interface of the optional parameter configuration control includes the name of the optional parameter and a default value set by the graphic machine learning algorithm platform for the parameter. For example, "concurrent computation amount" in FIG. 5 is the name of an optional parameter, and the default value of the parameter is 100. The user can accept the default value and can also modify the default value in a parameter bar.

In S205, test data is input to the super component after completion of configuration, and the same test data is input to the functional model corresponding to the super component (i.e., the functional model that builds the super component). If the output result of the super component is the same as the output result of the functional model, S206 is performed; otherwise, at least one of S203 and S204 is performed.

S206, the super component is released.

In FIG. 2, the order of S202-S204 can be interchanged, and S205 is an optional step.

The process shown in FIG. 2 is exemplified in the following.

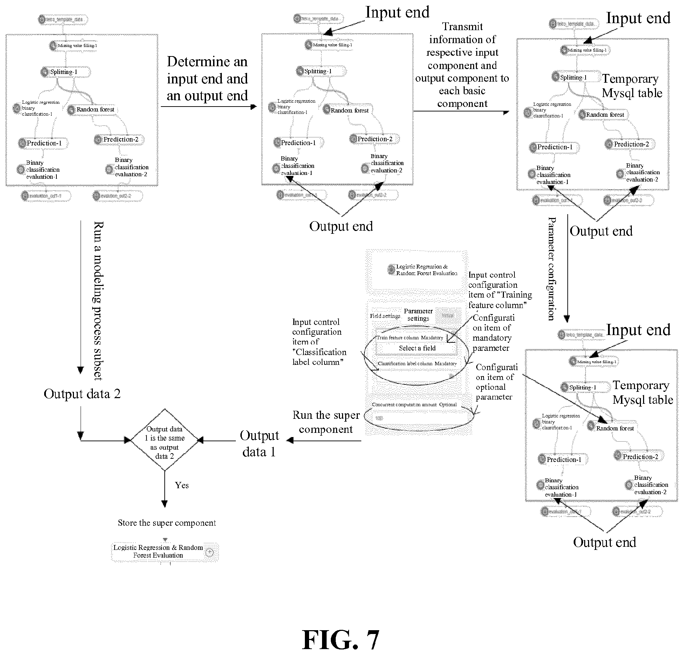

As shown in FIG. 7, a user drags basic components onto a canvas on a graphic machine learning algorithm platform and uses arrows to form the basic components into a process. The user selects a part from the process, and the user can also right click, select "Merge" in a pop-up menu, merge the selected components to form a modeling process subset, and enter the name "Logistic Regression & Random Forest Evaluation".

The graphic machine learning algorithm platform uses the port of starting basic component "missing value filling-1" of the modeling process subset, connecting to an upstream component, as the input end of the super component "Logistic Regression & Random Forest Evaluation", and uses the ports of end basic components "binary classification evaluation-1" and " binary classification evaluation-2" of the modeling process subset, connecting to downstream components, as output ends of the super component "Logistic Regression & Random Forest Evaluation".

The user clicks on basic component "random forest" in the modeling process subset, and the graphic machine learning algorithm platform pops up the visual interface shown in FIG. 5 in response to the user's click command.

The user completes configuration of the parameter configuration controls on the visual interface.

The graphic machine learning algorithm platform receives parameters input by the user for the super component of which the configuration has been completed, runs the super component, and obtains output data of the super component.

The graphic machine learning algorithm platform receives parameters input by the user for the modeling process subset, runs the modeling process subset, and obtains output data of the modeling process subset.

If the output data of the super component is the same as the output data of the modeling process subset, the graphic machine learning algorithm platform releases the super component.

At this point, the graphic machine learning algorithm platform has released a new super component. If users require the function of the modeling process subset, they can use the super component directly without the need of building the modeling process subset again.

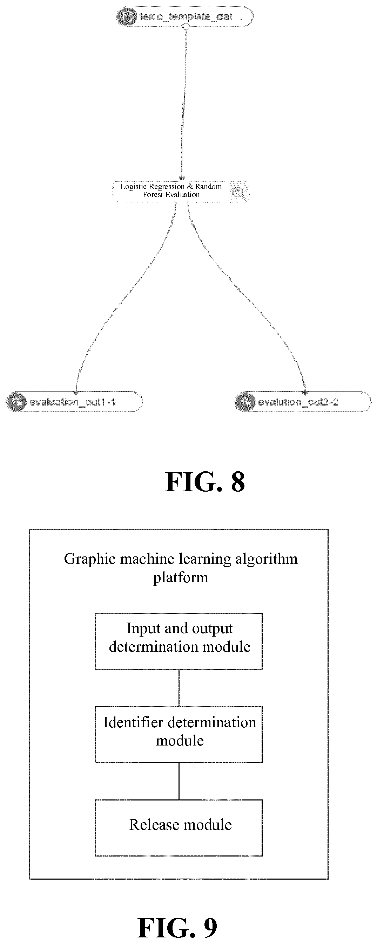

The super component is used in the same way as a basic component. FIG. 8 shows a process of using the super component: the user drags the super component "Logistic Regression & Random Forest Evaluation" onto the canvas in the graphic machine learning algorithm platform and builds a process with other basic components and/or super components.

If the user clicks the "Logistic Regression & Random Forest Evaluation" super component, as shown in FIG. 4, the graphic machine learning algorithm platform pops up a parameter configuration control, such as the "training feature column configuration control." The user selects a field in the "training feature column configuration control" to enter data as a training feature column. After the user configures the data of each parameter, during the running of the super component, the data is input from the input end and transmitted. The data includes values of mandatory parameters of each component in the super component, and each component identifies, from these pieces of data, which data it requires, wherein the basis of identification is the unique identifiers set for the mandatory parameters during release of the component.

In addition, during the running of the super component, the graphic machine learning algorithm platform establishes a temporary Mysql table according to the directions of the arrows in the super component, for recording the input component and output component of each basic component, so as to transmit to each basic component information for its own input component and output component. The content of the temporary Mysql table includes four elements of the component: input, output, field settings, and parameter settings. When the component pointed to by the arrow is run, the four elements will be extracted from the Mysql table. After the super component finishes running, the graphic machine learning algorithm platform clears the Mysql table.

As can be seen from the above description, in the component release process shown in FIG. 2, a unique identifier is set for the mandatory parameter of the basic component by configuring the parameter configuration control of the basic component in the functional model, so that the mandatory parameter has the character of a "global parameter". That is, during the running of the super component, a basic component in the super component can identify which data is a value of a mandatory parameter needed by itself. Therefore, the super component released in FIG. 2 can be used repeatedly, which facilitates use by the user.

A graphic machine learning platform-based component creation method is further disclosed in the embodiments of this application, including the following steps:
After receiving a new component creation instruction, a graphic machine learning platform creates a new component according to an established functional model. A mandatory parameter of each component in the new component has a unique identifier, and the unique identifier is used for the new component to identify the value of the mandatory parameter during running.

In this embodiment, the specific manner of creating a new component according to an established functional model is: determining unique identifiers of mandatory parameters of components in the functional model, and determining an input and output end of the new component according to the connection relationship of the components in the functional model, so as to create the new component. For the specific implementation process of each step, reference can be made to FIG. 2.

After the new component is created, the graphic machine learning platform can release the new component according to a user's instruction.

It can be seen that in this embodiment, the graphic machine learning platform has the function of creating a new component.

FIG. 9 shows a graphic machine learning algorithm platform disclosed in an embodiment of this application, including: an input and output determination module, an identifier determination module, and a release module.

The input and output determination module is used for determining, after receiving an instruction to release a functional model as a new component, an input end and output end of the new component according to the connection relationship of components in the functional model. The identifier determination module is used for determining unique identifiers of mandatory parameters of the components in the functional model, wherein the unique identifiers are used for the new component to identify values of the mandatory parameters during running. The release module is used for releasing the functional model as the new component.

For the specific function implementation process of each module, reference can be made to FIG. 2; further details will not be given here.

The graphic machine learning algorithm platform described in this embodiment has the function of releasing a functional model as a new component, and thus can facilitate use by the user.

A graphic machine learning algorithm platform is further disclosed in the embodiments of this application, including a component creation module used for creating, after receiving a new component creation instruction, a new component according to an established functional model, wherein a mandatory parameter of each component in the new component has a unique identifier, and the unique identifier is used for the new component to identify the value of the mandatory parameter during running. The specific implementation manner of creating a new component according to an established functional model is: determining unique identifiers of mandatory parameters of the components in the functional model, and determining an input end and output end of the new component according to the connection relationship of the components in the functional model, so as to create the new component.

It can be seen that the graphic machine learning algorithm platform described in this embodiment has the function of creating a new component.

If implemented in the form of software functional units and sold or used as separate products, the functions described in the methods of the embodiments of this application may be stored in a computing device-readable storage medium. Based on such understanding, the portion of the embodiments of this application that contributes to the prior art or the technical solution portion may be embodied in the form of a software product. The software product is stored in a storage medium and includes several instructions for enabling a computing device (which may be a personal computer, a server, a mobile computing device, or a network device, etc.) to perform all or some of the steps of the methods described in various embodiments of this application. The foregoing storage medium includes: a USB flash disk, a mobile hard disk, a Read-Only Memory (ROM), a Random Access Memory (RAM), a magnetic disk, an optical disc, or other various media that can store program codes.

The various embodiments in the specification are described in a progressive manner, each embodiment focuses on differences from other embodiments, and identical or similar parts of the various embodiments may be obtained with reference to each other.

The above description of the disclosed embodiments enables those skilled in the art to implement or use this application. Various modifications to these embodiments would be obvious to those skilled in the art. Therefore, this application is not limited to the embodiments shown herein, but is to be accorded with the broadest scope consistent with the principles and novel characteristics disclosed herein and as defined by the appended claims.

## Claims

1. A computer-implemented component releasing method applied to a graphic machine learning algorithm platform, the method comprising:
in response to receiving an instruction to release a functional model of the graphic machine learning algorithm platform as a new component, determining (S203) an input end and output end of the new component according to the connection relationship of components in the functional model;
determining (S204) unique identifiers of mandatory parameters of the components in the functional model, wherein the unique identifiers are used for the new component to identify values of the mandatory parameters during running; and
releasing (S206) the functional model as the new component of the graphic machine learning algorithm platform, wherein releasing the functional model as the new component comprises:
inputting test data to the new component and running the new component;
inputting the test data to the functional model and running the functional model; and
if data output by the new component after running is the same as data output by the functional model after running, releasing the functional model as the new component.

2. The method according to claim 1, wherein determining unique identifiers of mandatory parameters of the components in the functional model comprises:
in response to receiving an instruction to select a component in the functional model, displaying a visual interface of the component; and
receiving the unique identifier of the mandatory parameter of the component through the visual interface.

3. The method according to claim 2, wherein the visual interface comprises:
a configuration interface of a mandatory parameter configuration control of the component,
wherein the mandatory parameter configuration control is used for receiving a configuration instruction for the mandatory parameter during the running of the new component.

4. The method according to claim 3, wherein the visual interface further comprises:
a configuration interface of an optional parameter configuration control, wherein the optional parameter configuration control is used for receiving a configuration instruction for the optional parameter during the running of the new component.

5. A computer readable storage medium that stores a set of instructions that, when executed by at least one processor of a device, cause the device to perform the component releasing method according to any of claims 1 to 4.

6. A computer program comprising instructions which, when the program product is executed by a computer, cause the computer to carry out the component releasing method according to any of claims 1 to 4.

7. A graphic machine learning algorithm platform, comprising:
an input and output determination module configured to determine (S203), in response to receiving an instruction to release a functional model of the graphic machine learning algorithm platform as a new component, an input end and output end of the new component according to the connection relationship of components in the functional model;
an identifier determination module configured to determine (S204) unique identifiers of mandatory parameters of the components in the functional model, wherein the unique identifiers are used for the new component to identify values of the mandatory parameters during running; and
a release module configured to input test data to the new component and run the new component, input the test data to the functional model and run the functional model, and, if data output by the new component after running is the same as data output by the functional model after running, then release (S206) the functional model as the new component of the graphic machine learning algorithm platform.

8. The graphic machine learning algorithm platform according to claim 7, wherein the identifier determination module is further configured:
to display, in response to receiving an instruction to select a component in the functional model, a visual interface of the component, and receive the unique identifier of the mandatory parameter of the component through the visual interface.

9. The graphic machine learning algorithm platform according to claim 8, wherein the identifier determination module is further configured to:
display a configuration interface of a mandatory parameter configuration control of the component, wherein the mandatory parameter configuration control is used for receiving a configuration instruction for the mandatory parameter during the running of the new component.

10. The graphic machine learning algorithm platform according to claim 9, wherein the visual interface further comprises:
a configuration interface of an optional parameter configuration control, wherein the optional parameter configuration control is used for receiving a configuration instruction for the optional parameter during the running of the new component.

## Patentansprüche

1. Computerimplementiertes Komponentenfreigabeverfahren, das auf eine grafische Maschinenlernalgorithmusplattform angewendet wird, wobei das Verfahren umfasst:
als Reaktion auf das Empfangen einer Anweisung zum Freigeben eines Funktionsmodells der grafischen Maschinenlernalgorithmusplattform als eine neue Komponente, Bestimmen (S203) eines Eingabeendes und eines Ausgabeendes der neuen Komponente gemäß der Verbindungsbeziehung von Komponenten in dem Funktionsmodell;
Bestimmen (S204) von eindeutigen Kennungen von Pflichtparametern der Komponenten in dem Funktionsmodell, wobei die eindeutigen Kennungen für die neue Komponente verwendet werden, um Werte der Pflichtparameter während des Ausführens zu identifizieren; und
Freigeben (S206) des Funktionsmodells als die neue Komponente der grafischen Maschinenlernalgorithmusplattform, wobei das Freigeben des Funktionsmodells als die neue Komponente umfasst: Eingeben von Testdaten in die neue Komponente und Ausführen der neuen Komponente; Eingeben der Testdaten in das Funktionsmodell und Ausführen des Funktionsmodells; und wenn die Datenausgabe durch die neue Komponente nach dem Ausführen die gleiche ist wie die Datenausgabe durch das Funktionsmodell nach dem Ausführen, Freigeben des Funktionsmodells als die neue Komponente.

2. Verfahren nach Anspruch 1, wobei das Bestimmen von eindeutigen Kennungen von Pflichtparametern der Komponenten in dem Funktionsmodell umfasst:
als Reaktion auf das Empfangen einer Anweisung zum Auswählen einer Komponente in dem Funktionsmodell, Anzeigen einer visuellen Schnittstelle der Komponente; und
Empfangen der eindeutigen Kennung des Pflichtparameters der Komponente über die visuelle Schnittstelle.

3. Verfahren nach Anspruch 2, wobei die visuelle Schnittstelle umfasst:
eine Konfigurationsschnittstelle einer Pflichtparameter-Konfigurationssteuerung der Komponente, wobei die Pflichtparameter-Konfigurationssteuerung zum Empfangen einer Konfigurationsanweisung für den Pflichtparameter während des Ausführens der neuen Komponente verwendet wird.

4. Verfahren nach Anspruch 3, wobei die visuelle Schnittstelle ferner umfasst:
eine Konfigurationsschnittstelle einer Optionalparameter-Konfigurationssteuerung, wobei die Optionalparameter-Konfigurationssteuerung zum Empfangen einer Konfigurationsanweisung für den Optionalparameter während des Ausführens der neuen Komponente verwendet wird.

5. Computerlesbares Speichermedium, das einen Satz von Anweisungen speichert, die, wenn sie von mindestens einem Prozessor einer Vorrichtung ausgeführt werden, die Vorrichtung veranlassen, das Komponentenfreigabeverfahren nach einem der Ansprüche 1 bis 4 durchzuführen.

6. Computerprogramm, umfassend Anweisungen, die, wenn das Programmprodukt durch einen Computer ausgeführt wird, den Computer veranlassen, das Komponentenfreigabeverfahren nach einem der Ansprüche 1 bis 4 durchzuführen.

7. Grafische Maschinenlernalgorithmusplattform, umfassend:
ein Eingabe- und Ausgabebestimmungsmodul, das konfiguriert ist, um als Reaktion auf das Empfangen einer Anweisung zum Freigeben eines Funktionsmodells der grafischen Maschinenlernalgorithmusplattform als eine neue Komponente ein Eingabeende und ein Ausgabeende der neuen Komponente gemäß der Verbindungsbeziehung der Komponenten in dem Funktionsmodel zu bestimmen (S203);
ein Kennungsbestimmungsmodul, das konfiguriert ist, um eindeutige Kennungen von Pflichtparametern der Komponenten in dem Funktionsmodell zu bestimmen (S204), wobei die eindeutigen Kennungen für die neue Komponente verwendet werden, um Werte der Pflichtparameter während des Ausführens zu identifizieren; und
ein Freigabemodul, das konfiguriert ist, um Testdaten in die neue Komponente einzugeben und die neue Komponente auszuführen, die Testdaten in das Funktionsmodell einzugeben und das Funktionsmodell auszuführen, und, wenn die Datenausgabe durch die neue Komponente nach dem Ausführen die gleiche ist wie die Datenausgabe durch das Funktionsmodell nach dem Ausführen, das Funktionsmodell als die neue Komponente der grafischen Maschinenlernalgorithmusplattform freizugeben (S206).

8. Grafische Maschinenlernalgorithmusplattform nach Anspruch 7, wobei das Kennungsbestimmungsmodul ferner konfiguriert ist, um:
eine visuelle Schnittstelle der Komponente, als Reaktion auf das Empfangen einer Anweisung zum Auswählen einer Komponente in dem Funktionsmodell, anzuzeigen und die eindeutige Kennung des Pflichtparameters der Komponente über die visuelle Schnittstelle zu empfangen.

9. Grafische Maschinenlernalgorithmusplattform nach Anspruch 8, wobei das Kennungsbestimmungsmodul ferner konfiguriert ist, um:
eine Konfigurationsschnittstelle einer Pflichtparameter-Konfigurationssteuerung der Komponente anzuzeigen, wobei die Pflichtparameter-Konfigurationssteuerung zum Empfangen einer Konfigurationsanweisung für den Pflichtparameter während des Ausführens der neuen Komponente verwendet wird.

10. Grafische Maschinenlernalgorithmusplattform nach Anspruch 9, wobei die visuelle Schnittstelle ferner umfasst:
eine Konfigurationsschnittstelle einer Optionalparameter-Konfigurationssteuerung, wobei die Optionalparameter-Konfigurationssteuerung zum Empfangen einer Konfigurationsanweisung für den Optionalparameter während des Ausführens der neuen Komponente verwendet wird.

## Revendications

1. Procédé de publication de composants mis en œuvre par ordinateur appliqué à une plate-forme d'algorithme d'apprentissage automatique graphique, le procédé comprenant :
en réponse à la réception d'une instruction pour publier un modèle fonctionnel de la plate-forme d'algorithme d'apprentissage automatique graphique en tant que nouveau composant, la détermination (S203) d'une extrémité d'entrée et d'une extrémité de sortie du nouveau composant selon la relation de connexion de composants dans le modèle fonctionnel ;
la détermination (S204) des identifiants uniques de paramètres obligatoires des composants dans le modèle fonctionnel, lesdits identifiants uniques étant utilisés pour le nouveau composant afin d'identifier des valeurs des paramètres obligatoires durant l'exécution ; et
la publication (S206) du modèle fonctionnel en tant que nouveau composant de la plate-forme d'algorithme d'apprentissage automatique graphique, la publication du modèle fonctionnel en tant que nouveau composant comprenant : l'entrée de données d'essai dans le nouveau composant et l'exécution du nouveau composant ; l'entrée des données d'essai dans le modèle fonctionnel et l'exécution du modèle fonctionnel ; et si les données délivrées en sortie par le nouveau composant après l'exécution sont les mêmes que les données délivrées en sortie par le modèle fonctionnel après l'exécution, la publication du modèle fonctionnel en tant que nouveau composant.

2. Procédé selon la revendication 1, ladite détermination d'identifiants uniques de paramètres obligatoires des composants dans le modèle fonctionnel comprenant :
en réponse à la réception d'une instruction pour sélectionner un composant dans le modèle fonctionnel, l'affichage d'une interface visuelle du composant ; et
la réception de l'identifiant unique du paramètre obligatoire du composant par l'intermédiaire de l'interface visuelle.

3. Procédé selon la revendication 2, ladite interface visuelle comprenant :
une interface de configuration d'une commande de configuration de paramètre obligatoire du composant, ladite commande de configuration de paramètre obligatoire étant utilisée pour recevoir une instruction de configuration pour le paramètre obligatoire durant l'exécution du nouveau composant.

4. Procédé selon la revendication 3, ladite interface visuelle comprenant en outre :
une interface de configuration d'une commande de configuration de paramètre facultatif, ladite commande de configuration de paramètre facultatif étant utilisée pour recevoir une instruction de configuration pour le paramètre facultatif durant l'exécution du nouveau composant.

5. Support de stockage lisible par ordinateur qui stocke un ensemble d'instructions qui, lorsqu'elles sont exécutées par au moins un processeur d'un dispositif, amènent le dispositif à réaliser le procédé de publication de composants selon l'une quelconque des revendications 1 à 4.

6. Programme informatique comprenant des instructions qui, lorsque le produit programme est exécuté par un ordinateur, amènent l'ordinateur à effectuer le procédé de publication de composant selon l'une quelconque des revendications 1 à 4.

7. Plate-forme d'algorithmes d'apprentissage automatique graphique, comprenant :
un module de détermination d'entrée et de sortie configuré pour déterminer (S203), en réponse à la réception d'une instruction pour publier un modèle fonctionnel de la plate-forme d'algorithme d'apprentissage automatique graphique en tant que nouveau composant, une extrémité d'entrée et une extrémité de sortie du nouveau composant selon la relation de connexion des composants dans le modèle fonctionnel ;
un module de détermination d'identifiant configuré pour déterminer (S204) des identifiants uniques de paramètres obligatoires des composants dans le modèle fonctionnel, lesdits identifiants uniques étant utilisés pour le nouveau composant afin d'identifier des valeurs des paramètres obligatoires durant l'exécution ; et
un module de publication configuré pour entrer des données d'essai dans le nouveau composant et exécuter le nouveau composant, entrer les données d'essai dans le modèle fonctionnel et exécuter le modèle fonctionnel, et, si les données délivrées en sortie par le nouveau composant après l'exécution sont les mêmes que les données délivrées en sortie par le modèle fonctionnel après l'exécution, alors publication (S206) du modèle fonctionnel en tant que nouveau composant de la plate-forme d'algorithme d'apprentissage automatique graphique.

8. Plate-forme d'algorithme d'apprentissage automatique graphique selon la revendication 7, ledit module de détermination d'identifiant étant en outre configuré :
pour afficher, en réponse à la réception d'une instruction pour sélectionner un composant dans le modèle fonctionnel, une interface visuelle du composant, et recevoir l'identifiant unique du paramètre obligatoire du composant par l'intermédiaire de l'interface visuelle.

9. Plate-forme d'algorithme d'apprentissage automatique graphique selon la revendication 8, ledit module de détermination d'identifiant étant en outre configuré pour :
afficher une interface de configuration d'une commande de configuration de paramètre obligatoire du composant, ladite commande de configuration de paramètre obligatoire étant utilisée pour recevoir une instruction de configuration pour le paramètre obligatoire durant l'exécution du nouveau composant.

10. Plate-forme d'algorithme d'apprentissage automatique graphique selon la revendication 9, ladite interface visuelle comprenant en outre :
une interface de configuration d'une commande de configuration de paramètre facultatif, ladite commande de configuration de paramètre facultatif étant utilisée pour recevoir une instruction de configuration pour le paramètre facultatif durant l'exécution du nouveau composant.
